(19) Europäisches Patentamt
European Patent Office
Office européen des brevets

(11) EP 0 897 556 B1

# (12) EUROPÄISCHE PATENTSCHRIFT

(45) Veröffentlichungstag und Bekanntmachung des Hinweises auf die Patenterteilung:
**10.10.2001 Patentblatt 2001/41**

(21) Anmeldenummer: **97922999.4**

(22) Anmeldetag: **07.05.1997**

(51) Int Cl.$^7$: **G03C 1/06**, G03C 1/34

(86) Internationale Anmeldenummer:
**PCT/EP97/02333**

(87) Internationale Veröffentlichungsnummer:
**WO 97/42546 (13.11.1997 Gazette 1997/49)**

(54) **SILBERHALOGENID-AUFZEICHNUNGSMATERIAL MIT VERBESSERTER LAGERUNGSBESTÄNDIGKEIT ZUR ERZEUGUNG VON NEGATIVBILDERN MIT ULTRASTEILEM KONTRAST**

SILVER-HALIDE RECORDING MATERIAL WITH IMPROVED STORAGE STABILITY TO PRODUCE NEGATIVES WITH ULTRAHARD-GRADATION CONTRAST

MATIERE D'ENREGISTREMENT A BASE D'HALOGENURE D'ARGENT A DUREE DE CONSERVATION ACCRUE, POUR LA PRODUCTION D'IMAGES NEGATIVES A CONTRASTE PRESENTANT UNE GRADATION ULTRADURE

(84) Benannte Vertragsstaaten:
**DE FR GB**

(30) Priorität: **07.05.1996 DE 19618196**

(43) Veröffentlichungstag der Anmeldung:
**24.02.1999 Patentblatt 1999/08**

(73) Patentinhaber: **Agfa-Gevaert**
**2640 Mortsel (BE)**

(72) Erfinder:
- **RÜGER, Reinhold**
  **D-63322 Rödermark (DE)**
- **VARESCON, François**
  **D-63263 Neu-Isenburg (DE)**

(56) Entgegenhaltungen:
**EP-A- 0 393 477**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein photographisches Silberhalogenid-Aufzeichnungsmaterial zur Erzeugung von schwarz-weißen Negativbildern mit ultrasteilem Kontrast, das eine Hydrazinverbindung und eine kontraststeigernde Aminoverbindung enthält.

Bei der photomechanischen Reproduktion müssen häufig Halbtonbilder in Rasterpunktbilder umgewandelt werden. Hierzu verwendet man Silberhalogenidmaterialien, die man in besonderen Verfahren zu ultrasteilem Kontrast, d. h. zu einer maximalen Steigung der Schwärzungskurve von mehr als 10, entwickelt. Bekannt sind beispielsweise das Lithverfahren mit sulfitarmen, formaldehydhaltigen Hydrochinonentwicklern. Besondere praktische Bedeutung hat neuerdings die Entwicklung in Gegenwart von Hydrazinverbindungen.

Bei diesem Verfahren werden häufig gewisse Aminoverbindungen zur weiteren Steigerung des Kontrastes angewendet. So wird in der EP-00 32 456-B1 ein Verfahren beansprucht, bei dem man ein Aufzeichnungsmaterial in Gegenwart einer Hydrazinverbindung mit einem Hydrochinon-3-Pyrazolidinon-Entwickler verarbeitet, der eine kontraststeigernde Menge einer Aminoverbindung enthält. Solche Entwickler weisen jedoch eine Reihe von Nachteilen auf. Daher werden seit einigen Jahren auch kontraststeigernde Aminoverbindungen gemeinsam mit Hydrazinverbindungen in das photographische Aufzeichnungsmaterial inkorporiert.

In der deutschen Offenlegungsschrift DE-A-43 10 327 ist ein Verfahren zur Erzeugung von Negativbildern mit ultrasteilem Kontrast beschrieben, bei dem die Entwicklung des Silberhalogenid-Aufzeichnungsmaterials in Gegenwart von Verbindungen erfolgt, deren Moleküle mindestens ein quaternäres Stickstoffatom und mindestens eine tertiäre Aminfunktion aufweisen.

In der EP-04 73 342-A1 ist ein photographisches Silberhalogenidmaterial beschrieben, das in einem Entwickler mit einem pH < 11 zu ultrasteilem Kontrast entwickelt werden kann. Die lichtempfindliche Beschichtung dieses Materials enthält eine Hydrazinverbindung einer bestimmten Formel sowie eine Amino- oder eine quaternäre Oniumverbindung und ist auf einen pH von mindestens 5,9 eingestellt.

US 4,975,354 schlägt vor, den Silberhalogenidmaterialien neben Hydrazinverbindungen noch bestimmte sekundäre oder tertiäre Aminoverbindungen, die außerdem mindestens drei Oxyethylenenheiten in ihrem Molekül enthalten, als Kontrastverstärker ("booster") zu inkorporieren.

EP 04 22 677 beschreibt die Anwendung von tertiären Aminoverbindungen mit mindestens drei Oxyethyleneinheiten im Molekül als Entwicklungsbeschleuniger in Entwicklerlösungen, die auch in Gegenwart von Hydrazinverbindungen wirken.

EP 05 39 998 beansprucht Silberhalogenidmaterialien, die neben Hydrazinverbindungen noch Thioetherverbindungen mit tertiärer Aminogruppe enthalten.

Weitere Aminoverbindungen, die bei Inkorporierung mit Hydrazinverbindungen kontraststeigernd wirken, sind in der EP-A-06 63 611 beschrieben.

Schließlich ist aus der US 4,929,535 auch bekannt, daß gewisse Phosphoniumverbindungen eine kontraststeigernde Wirkung in Silberhalogenidmaterialien, die eine Hydrazinverbindung enthalten, entfalten können.

Ein häufig beobachteter Mangel der bekannten Hochkontrast-Aufzeichnungsmaterialien ist eine starke Veränderung der photographischen Eigenschaften bei längerer Lagerung.

Insbesondere steigt der Schleier. Die üblichen Maßnahmen gegen Schleier, nämlich die Zugabe von Antischleiermitteln zur Emulsion und eine weniger intensive chemische Reifung, haben eine unzureichende Empfindlichkeit zur Folge. Außerdem behindern die üblichen Antischleiermittel, wie Benzotriazole, Nitroindazole und Mercaptotetrazole, die infektiöse Entwicklung, sodaß der Kontrast, insbesondere bei der heute üblichen Schnellverarbeitung, unbefriedigend ist.

Die Erfindung stellt sich die Aufgabe, ein Silberhalogenid-Aufzeichnungsmaterial vorzuschlagen, das zum Erzeugen von Negativbildern mit ultrasteilem Kontrast bei kurzer Verarbeitungszeit geeignet ist und dessen photographische Eigenschaften, insbesondere der Schleier und der Kontrast, sich während der Lagerung nicht verschlechtern.

Diese Aufgaben werden gelöst durch ein Silberhalogenid-Aufzeichnungsmaterial nach dem Hauptanspruch.

Es wurde nämlich überraschenderweise gefunden, daß ein photographisches Silberhalogenidmaterial umfassend mindestens eine lichtempfindliche Silberhalogenid-Emulsionsschicht auf einem Schichtträger, bei dem in der Silberhalogenid-Emulsionsschicht oder in einer mit dieser in reaktiver Beziehung stehenden Schicht sowohl eine Hydrazinverbindung als auch eine kontraststeigernde Amino- und/oder Phosphoniumverbindung vorhanden sind, eine ausgezeichnete Lagerbeständigkeit besitzt, wenn die Silberhalogenid-Emulsionsschicht oder eine mit dieser in reaktiver Beziehung stehende Schicht ein Sulfit-, Hydrogensulfit- oder Bisulfitsalz enthält.

Das Sulfit-, Hydrogensulfit- oder Bisulfitsalz ist bevorzugt ein Alkalimetallsalz, insbesondere ein Lithium-, Natrium- oder Kaliumsalz. Beispiele geeigneter Salze sind $Na_2SO_3$, $NaHSO_3$, $Li_2S_2O_5$, $LiHSO_3$, $K_2SO_3$, $KHSO_3$, $K_2S_2O_5$; brauchbar sind auch beispielsweise $CaSO_3$ und $MgHSO_3$.

Das Sulfit-, Hydrogensulfit- oder Bisulfitsalz kann der Emulsion zu jeder Zeit während des Herstellungsvorgangs zugegeben werden. Bevorzugt erfolgt die Zugabe nach der Entfernung der löslichen Salze; besonders bevorzugt

nach Abschluß der chemischen Reifung. Das Salz kann in fester Form oder als - vorzugsweise wäßrige - Lösung zugesetzt werden. Es ist auch möglich, die Emulsionsschicht des Aufzeichnungsmaterials nach dem Auftragen auf den Schichtträger und Trocknen mit einer Lösung des Salzes zu behandeln.

Die Menge des in der Emulsion enthaltenen Sulfit-, Hydrogensulfit- oder Bisulfitsalzes kann je nach den Erfordernissen in weiten Grenzen variiert werden. Sie entspricht bevorzugt 0,05 bis 20 millimol Sulfitionen je mol Silberhalogenid. Ein besonders bevorzugter Bereich liegt zwischen 0,1 und 10 millimol, weiter bevorzugt ist der Bereich von 1 bis 10 millimol Sulfitionen je mol Silberhalogenid. Dabei entspricht ein mol eines Sulfit- bzw. Hydrogensulfitsalzes jeweils einem mol Sulfitionen, jedoch ein mol eines Bisulfitsalzes zwei mol Sulfitionen.

Die in dem erfindungsgemäßen Aufzeichnungsmaterial enthaltene Hydrazinverbindung kann in an sich bekannter Weise entweder in eine oder in mehrere Schichten des Aufzeichnungsmaterials inkorporiert werden. Dies können sowohl Schichten sein, welche das lichtempfindliche Silberhalogenid enthalten, als auch Schichten, die mit den erstgenannten in reaktiver Beziehung stehen, d. h. die so angeordnet sind, daß Stoffe von einer in die andere Schicht diffundieren können, wenn durch Reaktionen ein Konzentrationsgefälle aufrechterhalten wird. Zur Inkorporierung können sowohl Lösungen als auch Dispersionen der Hydrazinverbindung zu den Beschichtungslösungen zugefügt werden.

Geeignete Hydrazinverbindungen sind beispielsweise beschrieben in Research Disclosure 235 010 (November 1983),

DE-27 25 743-A1, EP-00 32 456-B1, EP-01 26 000-A2,
EP-01 38 200-A2, EP-02 03 521-A2, EP-02 17 310-A2,
EP-02 53 665-A2, EP-03 24 391-A2, EP-03 24 426-A2,
EP-03 26 443-A2, EP-03 56 898-A2, EP-04 73 342-A1,
EP-05 01 546-A1, EP-04 81 565-A , EP-05 98 315-A1,
EP-04 44 506-A.

Bevorzugte Hydrazinverbindungen sind durch die allgemeine Formel (H) beschrieben:

$$\text{B - Phenyl - NHNH - L - G} \qquad (H)$$

Hierin bedeuten B eine Ballastgruppe, G eine aktivierende Gruppe und L eine der Gruppen -CO- und -CO-CO-. "Phenyl" bedeutet einen Phenylenring, an den B und die Hydrazingruppe gebunden sind, und zwar bevorzugt in Para-Stellung, und der noch weiter substituiert sein kann.

Bevorzugte Ballastgruppen sind jene, die nicht elektronenanziehend sind, beispielsweise gerade oder verzweigte Alkylgruppen, (z. B. Methyl, Ethyl, n-Propyl, Isopropyl, n-Butyl, Isobutyl, n-Hexyl, n-Octyl, t-Octyl, n-Decyl, n-Dodecyl und ähnliche Gruppen), auch Alkoxygruppen, die als Alkyl eine der oben genannten Alkylgruppen enthalten, sowie Acylaminogruppen, wie Acetylamino, Propanoylamino, Butanoylamino, Octanoyiamino, Benzoylamino, Alkyl- und Arylsulfonamido- und ähnliche Gruppen.

Die genannten Gruppen können ihrerseits mit herkömmlichen photographischen Ballastgruppen substituiert sein, wie sie von inkorporierten diffusionsfesten Kupplern und anderen immobilisierten photographischen Zusätzen bekannt sind. Solche Ballastgruppen enthalten typischerweise mindestens 8 Kohlenstoffatome und können aus relativ reaktionsträgen aliphatischen oder aromatischen Gruppen ausgewählt werden, beispielsweise Alkyl, Alkoxy, Phenyl, Alkylphenyl, Phenoxy, Alkylphenoxy, Arylacyl, Arylamido, Alkylpyridinium-1-ylamido und ähnlichen Gruppen.

Die Alkyl- und Alkoxygruppen enthalten einschließlich etwaiger Ballastgruppen vorzugsweise 1 bis 20, die Acylaminogruppen vorzugsweise 2 bis 21 Kohlenstoffatome. Es können aber bis zu 30 oder mehr Kohlenstoffatome in diesen Gruppen enthalten sein. Besonders bevorzugt sind Methoxyphenyl, Tolyl, ballastiertes Butyramidophenyl, Butylsulfonamido und Toluylsulfonamido.

Zu den bevorzugten Hydrazinverbindungen gehören solche, deren Ballastgruppe noch eine adsorptionsfördernde Gruppe enthält. Solche Gruppen fördern die Adsorption des Moleküls an der Oberfläche der Silberhalogenidkristalle und sind an sich bekannt. Sie enthalten typischerweise wenigstens ein Schwefel- oder Stickstoffatom, das einen Silberkomplex bilden kann oder sonst eine Affinität zur Silberhalogenidoberfläche hat. Bevorzugte Beispiele sind Thioharnstoff-, Thiuronium-, heterozyklische Thioamid- und Triazolgruppen.

G ist vorzugsweise Wasserstoff, ggf. substituiertes Alkyl (z.B. Methyl, Hydroxymethyl, Monofluormethyl, Pyridinomethyl, Phenoxymethyl, Alkoxymethyl wie Methoxymethyl), ggf. substituiertes Aralkyl (z.B. Benzyl, o-Hydroxybenzyl) und ggf. substituiertes Aryl (z.B. Phenyl, 3,5-Dichlorphenyl, o-Methansulfonamidophenyl, 4-Methansulfonylmethyl, 2-Hydroxymethylphenyl), wobei Alkylgruppen mit elektronenanziehenden Substituenten, beispielsweise kationischen Gruppen mit quaternärem Stickstoffatom, wie Pyridinium und Imidazolium, besonders bevorzugt sind.

G kann auch weiter substituiert sein, z. B. mit Alkyl, Aralkyl, Alkenyl, Alkinyl, Alkoxy, Aryl, substituiertem Amino,

Ureido, Urethan, Aryloxy, Sulfamoyl, Carbamoyl, Alkyl- oder Arylthio, Alkyl- oder Arylsulfonyl, Alkyl- oder Arylsulfinyl, Hydroxy, Halogen, Cyan, Sulfo, Aryloxycarbonyl, Acyl, Alkoxycarbonyl, Acyloxy, Carbamid, Sulfonamid, Carboxyl, Phosphamid, Diacylamino, Imid.

G kann auch so gewählt werden, daß das L-G-Teil des Moleküls unter Ringbildung abgetrennt wird, wie dies z.B. in EP-B-02 53 665 beschrieben ist.

Beispiele geeigneter Hydrazinverbindungen sind:

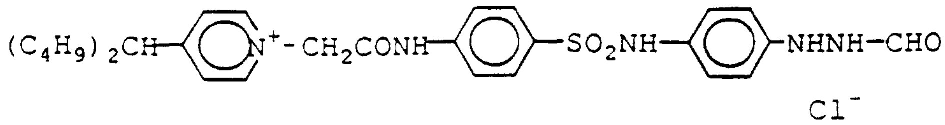

H-1

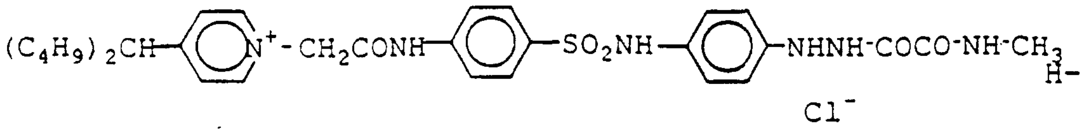

H-2

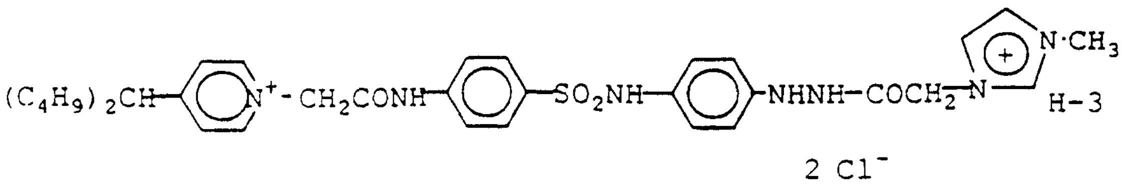

H-3

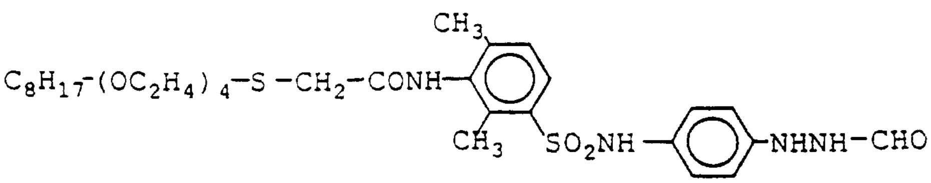

H-4

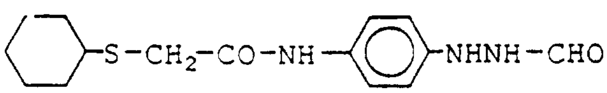

H-5

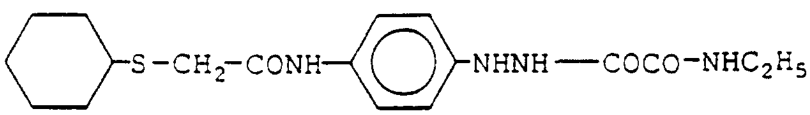

H-6

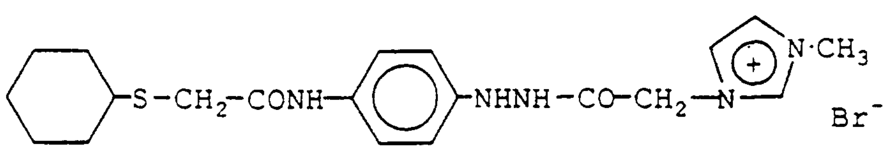

H-7

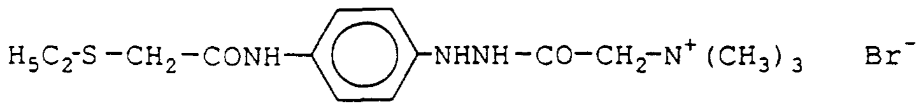

H-8

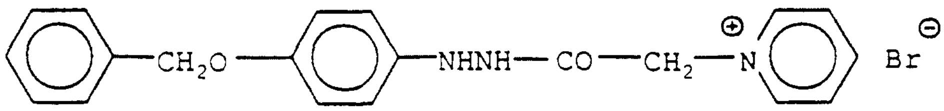

H-9

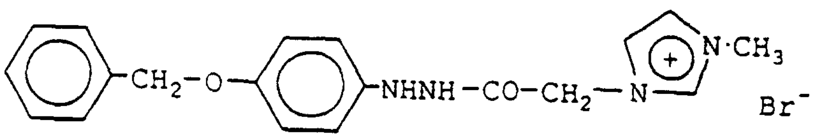

H-10

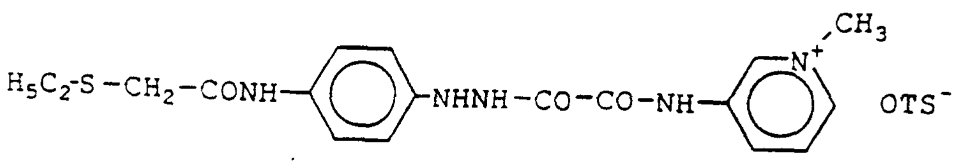

H-11

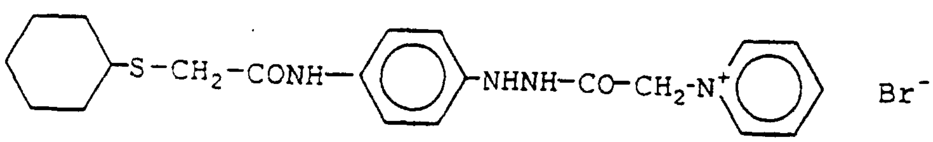

H-12

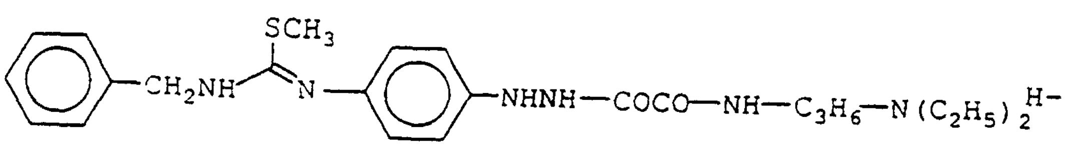

H-13

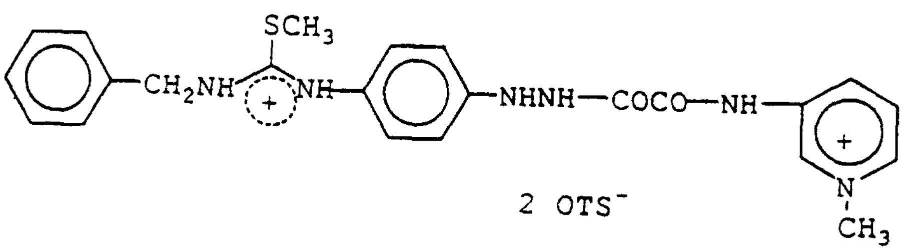

H-14

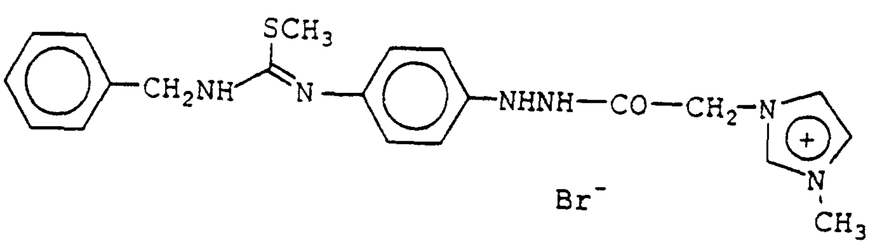

H-15

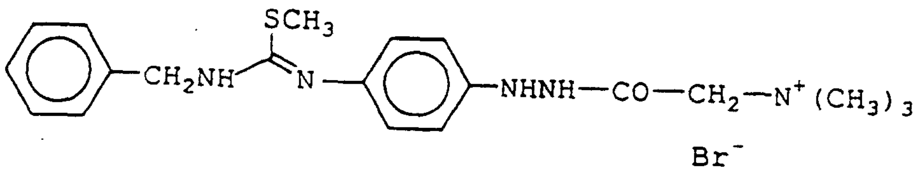

H-16

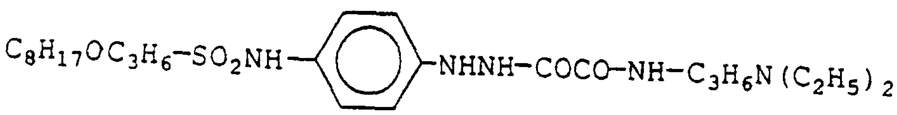

H-17

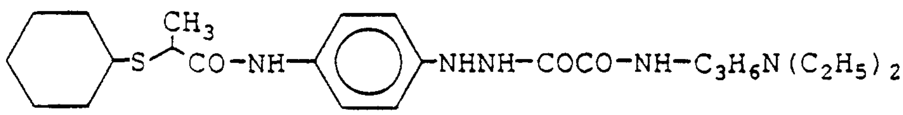

H-18

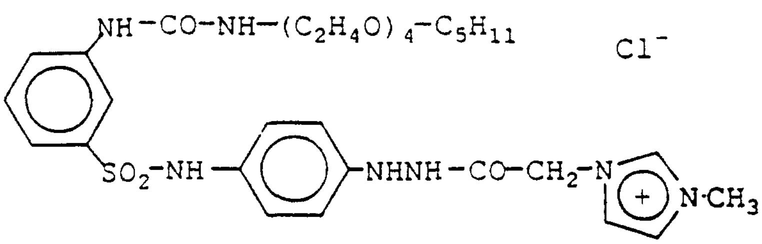

H-19

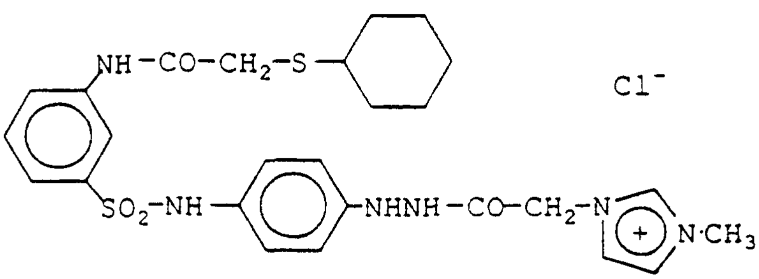

H-20

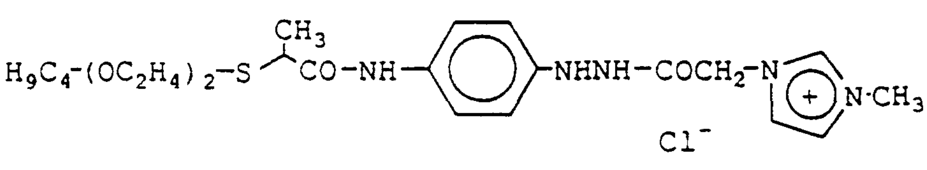

H-21

Die Menge der Hydrazinverbindung liegt bevorzugt zwischen $10^{-6}$ und $10^{-2}$ mol je mol Silberhalogenid.

Geeignete kontraststeigernde Aminoverbindungen sind beispielsweise bekannt aus US-A-4,914,003, EP-A-06 18 491 und EP-A-06 63 611.

Besonders geeignet sind Aminoverbindungen der allgemeinen Formel (A)

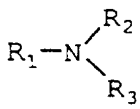

(A)

worin jeder der Substituenten $R_1$, $R_2$ und $R_3$ ein Wasserstoffatom, eine Alkylgruppe, eine substituierte Alkylgruppe, eine Alkenylgruppe, eine substituierte Alkenylgruppe, eine Alkinylgruppe, eine Arylgruppe oder eine substituierte Arylgruppe sein kann, jedoch nicht alle drei gleichzeitig Wasserstoff sind. Auch können die Substituenten miteinander zu einem oder zwei Ringen verknüpft sein und ihrerseits mit diffusionshemmenden (Ballast-) Gruppen und/oder bezüglich Silberhalogenidoberflächen adsorptionsfördernden Gruppen substituiert sein.

Bevorzugt werden Aminoverbindungen, die in ihrem Molekül wenigstens eine sekundäre oder tertiäre Aminogruppe und darüber hinaus eine Gruppe mit einem quaternären Stickstoffatom, eine Polyoxyalkylenkette, eine Thioether- oder Thioketongruppe, eine Nitrilgruppe, eine Sulfonylharnstoff- oder -urethangruppe oder eine Guanidingruppe enthalten.

In einer besonders bevorzugten Ausführungsform der Erfindung fällt die kontraststeigernde Aminoverbindung unter eine der allgemeinen Formeln (B), (C) oder (D):

$$RR^1N - X - (CN)_n \qquad (B)$$

$$NC - X - NR^2 - B - NR^2 - X - CN \qquad (C)$$

$$RR^1N - X - N(CH_2CN)_2 \qquad (D)$$

Die Reste R und $R^1$ können gleich oder verschieden sein und je eine geradkettige oder verzweigte Alkylgruppe mit 1 bis 6 Kohlenstoffatomen sein, beispielsweise Methyl, Ethyl, n-Propyl, Isopropyl, n-Butyl, Isobutyl, n-Hexyl. Sie können auch unter Einschluß des Stickstoffatoms und ggf. eines weiteren Stickstoffatoms, eines Sauerstoffatoms oder einer Carbonylgruppe einen heterozyklischen Ring mit 5 bis 12 Gliedern bilden, beispielsweise einen Piperidin-, Pyrrolidin-, Pyrrolin-, Oxazolidin-, Imidazolin-, Morpholin-, Pyrazan-, Azepin-, Oxazepin- oder Azacyclodecanring. Jede der Gruppen R und $R^1$ kann auch eine Benzylgruppe sein. Die Gruppen R und $R^1$ und auch die diesen Gruppen entsprechenden heterozyklischen Ringe können weiter substituiert sein, bevorzugt mit Hydroxyl-, Alkoxy-, Alkylthio- oder Alkylaminogruppen, wobei das Alkyl 1 bis 6 Kohlenstoffatome aufweisen kann. Beispiele solcher Substituenten sind Methoxy, Ethoxy, Propoxy, Butoxy, Ethylamino, Dimethylamino, Butylthio.

R oder $R^1$ können auch mit ihrem freien Ende unter Bildung eines Ringes, der das Stickstoffatom der tertiären Aminogruppe einschließt, an die verbindende Gruppe X anknüpfen. Ein sclcher Ring kann beispielsweise ein Piperidinring oder ein Morpholinring sein.

Die zweiwertigen verbindenden Gruppen X und B sind bevorzugt geradkettige, verzweigte oder cyclische Alkylengruppen mit 1 bis 20 Kohlenstoffatomen, Phenylen- oder Aralkylengruppen mit 7 bis 20 Kohlenstoffatomen, oder zweiwertige Ketten aus 1 bis 20 Methylengruppen, in die neben diesen auch Sauerstoff, Schwefel, Aminogruppen, Alken- oder Alkingruppen oder auch Polyoxyalkylengruppen, insbesondere Polyoxyethylen oder Polyoxypropylengruppen mit 1 bis 50 Oxyalkyleinheiten eingebaut sein können. Besonders bevorzugt ist eine Ethylen- oder Propylengruppe. Die genannten Gruppen können auch weiter substituiert sein, beispielsweise mit Alkyl-, Hydroxyl- und weiteren tertiären Aminogruppen.

Die verbindende Gruppe X kann auch dreiwertig sein und so die tertiäre Aminogruppe mit zwei Nitrilogruppen verbinden. Geeignet sind die im vorstehenden Absatz genannten Gruppen, wenn in ihnen eine weitere freie Valenz anstelle eines Wasserstoffatoms vorhanden ist. Als Beispiele seien genannt:

$$-CH< \qquad -CH_2-CH< \qquad -CH_2-CH<$$

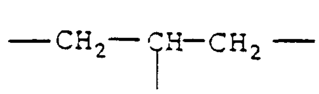

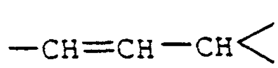

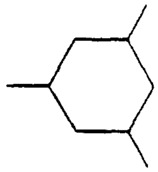

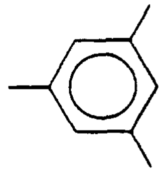

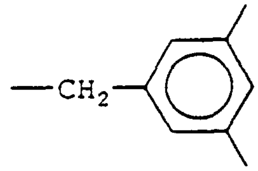

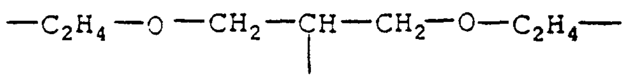

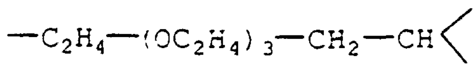

Der Rest $R^2$ in der allgemeinen Formel (B) bedeutet eine gesättigte oder ungesättigte Alkylgruppe, bevorzugt mit 1 bis 12 Kohlenstoffatomen, eine Arylgruppe, bevorzugt mit 6 bis 14 Kohlenstoffatomen oder eine Aralkylgruppe, bevorzugt mit 7 bis 15 Kohlenstoffatomen. Diese Gruppen können ihrerseits substituiert sein, beispielsweise mit Hydroxyl-, Amino-, Alkylamino- und Alkoxygruppen, wobei hierin das Alkyl vorzugsweise 1 bis 6 Kohlenstoffatome aufweist. Wenn es sich um eine Alkylgruppe handelt, dann kann diese auch mit ihrem vom Stickstoff abgewandten Ende unter Bildung eines Ringes an ein Kohlenstoffatom der Gruppe B gebunden sein. Ein solcher Ring kann beispielsweise ein Piperidin-, Pyrrolidin- oder Hexahydroazepinring sein. Die beiden Reste $R^2$ können auch gemeinsam mit B oder mit Teilen von B und mit den beiden Stickstoffatomen einen oder zwei gesättigte Ringe, vorzugsweise mit 5 oder 6 Gliedern, bilden, zum Beispiel Pyrrolidin- oder Piperidinringe.

Beispiele geeigneter Aminoverbindungen sind:

$(C_2H_5)_2N\text{-}C_3H_6—CN$ HCl A-1

$(i\text{-} C_3H_7)_2N\text{-}C_2H_4—CN$ HCl A-2

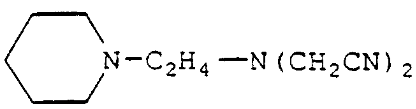

A-3

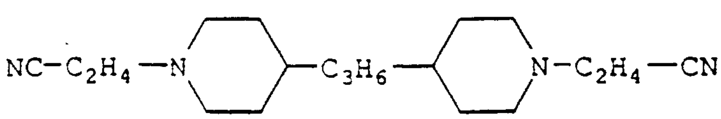

A-4

$(C_2H_5)_2N\text{-}C_2H_4—O—C_2H_4—CN$ A-5

$(C_2H_5)_2N\text{-}C_2H_4—S—C_2H_4—CN$ A-6

$(C_2H_5)_2N\text{-}CH_2—CHOH—CH_2OH$ A-7

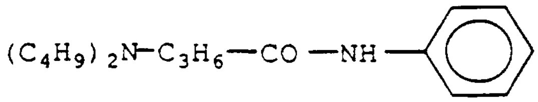

A-8

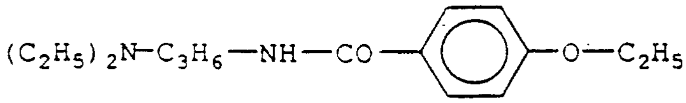 HCl

A-9

$(C_3H_7)_2N\text{-}C_2H_4—(OC_2H_4)_{14}—N(C_3H_7)_2$ A-10

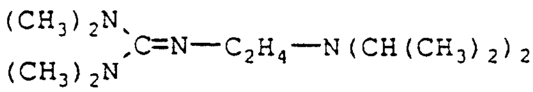 HCl

A-11

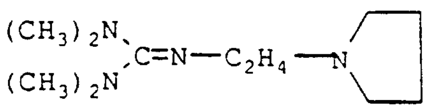 HCl

A-12

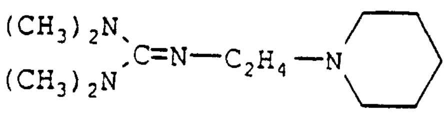 HCl

A-13

$[(C_2H_5)_2N-C_2H_4-NH-COCO-NH-(C_2H_4O)_2-CH_2]_2$ 2 HCl A-14

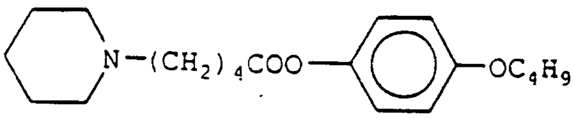

A-15

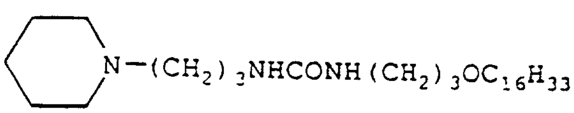

A-16

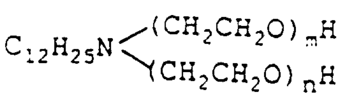 m,n = 0...20

A-17

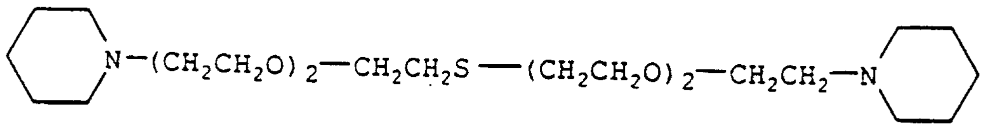

A-18

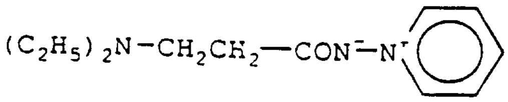

A-19

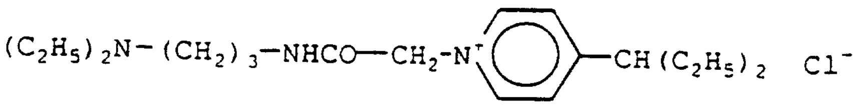

A-20

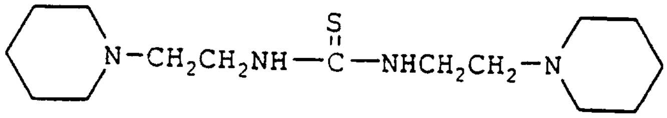

A-21

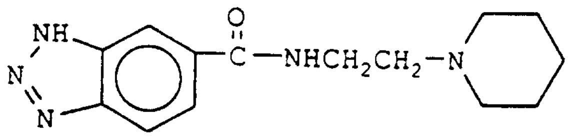

A-22

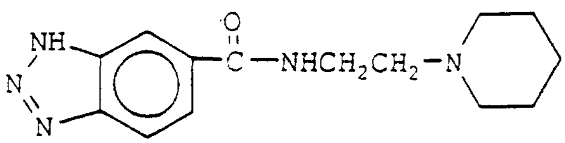

A-23

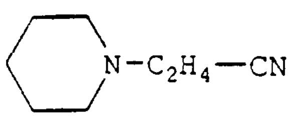

HCl

A-24

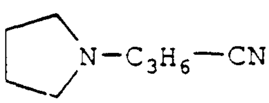

A-25

$(C_4H_9)_2N\text{-}C_2H_4\text{—}CN$ HCl A-26

$(C_4H_9)_2N\text{-}C_3H_6\text{—}N(CH_2CN)_2$ A-27

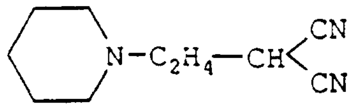

A-28

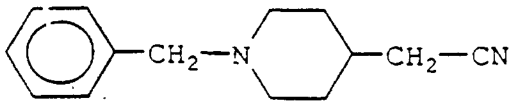

A-29

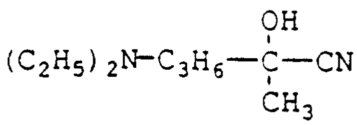

A-30

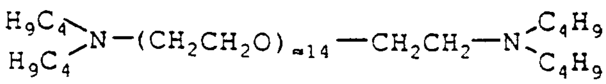

A-31

$[(C_2H_5)_2N-(C_2H_4O)_2-CH_2CHOHCH_2-OCH_2-]_2$

A-32

$(C_2H_5)_2N-CH_2CHOHCH_2-O-CH_2CH_2-CH_2CHOHCH_2-N(C_2H_5)_2$

A-33

$[(C_2H_5)_2N-(CH_2CH_2O)_2-CH_2CHOHCH_2-OCH_2CH_2-]_2$

A-34

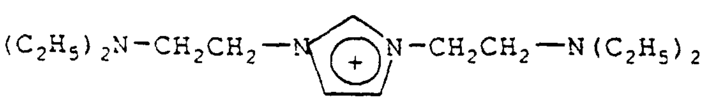 $Cl^-$

A-35

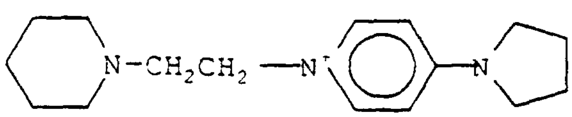 $Cl^-$

A-36

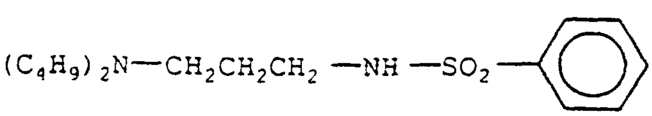 HCl

A-37

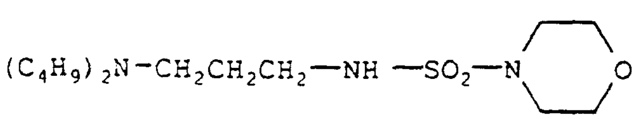

A-38

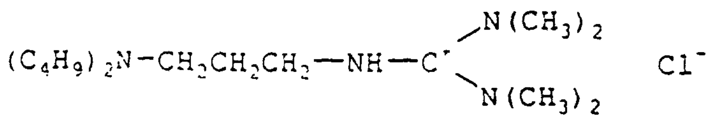

A-39

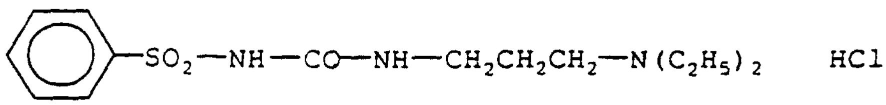

A-40

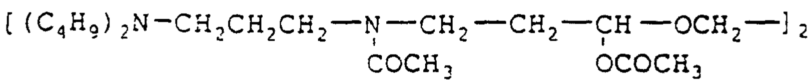

A-41

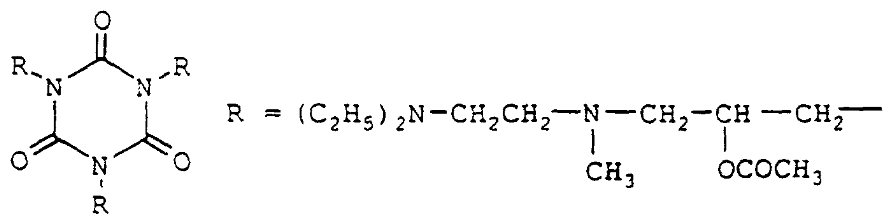

A-42

Geeignete kontraststeigernde Phosphoniumverbindungen werden beispielsweise durch die allgemeine Formel (P)

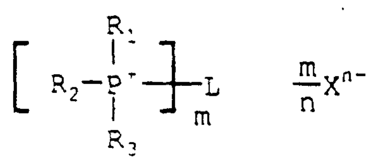

(P)

beschrieben. Darin sind

| | |
|---|---|
| $R_1$, $R_2$ und $R_3$ | jeweils eine Alkyl-, Cycloalkyl-, Aryl-, Alkenyl- oder Cycloalkenylgruppe oder eine heterocyclische Gruppe, wobei diese Gruppen jeweils auch Substituenten haben können, |
| L | eine an das Phosphoratom über ein Kohlenstoffatom gebundene m-wertige organische Gruppe, |
| n | 1, 2 oder 3, |
| X | ein n-wertiges Anion, welches auch an L gebunden sein kann. |

Beispiele geeigneter Phosphoniumverbindungen sind

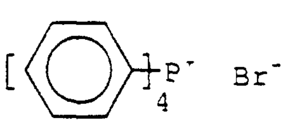

P-1

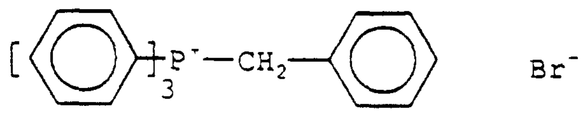

P-2

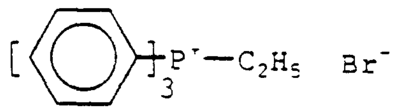

P-3

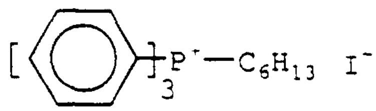

P-4

$(n\text{-}C_4H_9)_4P^+\ Br^-$

P-5

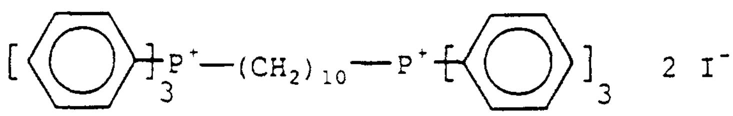

P-6

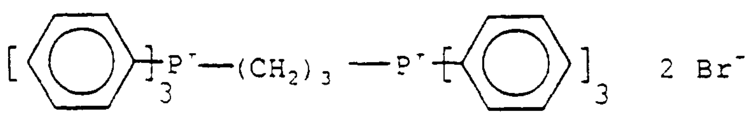

P-7

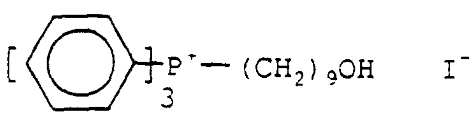

P-8

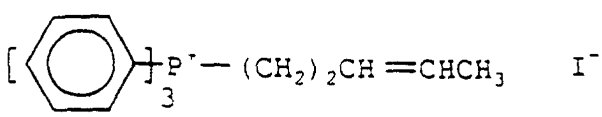

P-9

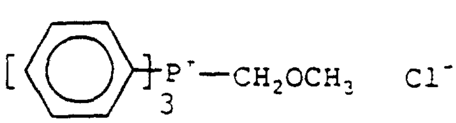

P-10

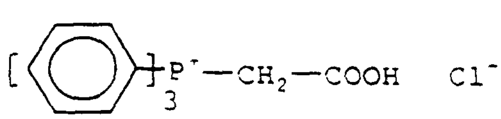

P-11

$(n\text{-}C_4H_9)_3\text{-}P^+\text{-}(n\text{-}C_{16}H_{33})$ $Br^-$ P-12

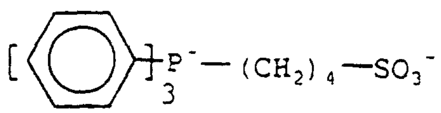

P-13

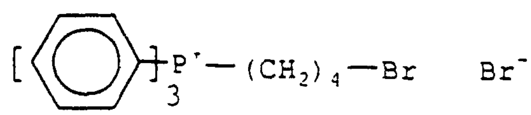

P-14

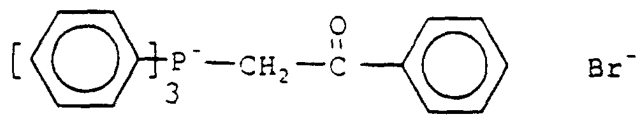

P-15

Die lichtempfindlichen Silberhalogenide der erfindungsgemäß verwendeten Aufzeichnungsmaterialien bestehen aus Silberchlorid, Silberbromid, Silberchlorobromid, Silberbromoiodid oder Silberchlorobromoiodid, wobei Silberbromid und Silberbromoiodid bevorzugt sind. Sie können monodispers oder polydispers sein, eine einheitliche Zusammensetzung haben, aber auch Körner mit Kern-Schale-Aufbau aufweisen, sowie auch Gemische von Körnern verschiedener Zusammensetzung und Korngrößenverteilung sein. Sie werden unter Verwendung eines hydrophilen kolloidalen Bindemittels, bevorzugt Gelatine, hergestellt. Die Silberhalogenidkörner können sphärische, polyedrische oder tafelförmige Gestalt haben. Methoden zur Herstellung geeigneter lichtempfindlicher Silberhalogenidemulsionen sind dem Fachmann bekannt und beispielsweise in der Research Disclosure 365 044, Kapitel I bis IV (September 1994) zusammengefaßt.

Bevorzugt für die erfindungsgemäß verwendeten Aufzeichnungsmaterialien werden Silberhalogenidemulsionen, die durch kontrollierten Doppelstrahleinlauf hergestellt werden und eine kubische Kornform haben. Vorteilhaft sind Emulsionen, bei denen mindestens 80 Gewichtsprozent des Silberhalogenids ir kubischer Form vorliegen. Besonders bevorzugt sind monodisperse Emulsionen, d. h. solche, bei denen der Variationskoeffizient (Quotient aus Standardabweichung und Mittelwert) der Korngröße kleiner als 0,30 ist. Unter Korngröße wird die Kantenlänge eines mit dem wirklichen Korn volumengleichen Würfels verstanden.

Das Kornvolumen der Silberhalogenidkörner in den Emulsionen richtet sich nach der erforderlichen Empfindlichkeit und kann beispielsweise dem kubischer Körner von 0,1 bis 0,7 µm Kantenlänge entsprechen. Ein bevorzugter Bereich liegt zwischen 0,15 und 0,30 µm. Bei der Emulsionsherstellung können Edelmetallsalze, besonders Salze von Rhodium oder Iridium, zur Steuerung der photographischen Eigenschaften in den üblichen Mengen anwesend sein.

Die Emulsionen werden bevorzugt chemisch sensibilisiert. Geeignete Verfahren sind die Schwefel-, die Reduktions- und die Edelmetallsensibilisierung, die auch in Kombination angewendet werden können. Für letztere können beispielsweise Gold- oder Iridiumverbindungen benutzt werden. Die Sensibilisierung wird bevorzugt in Gegenwart von Salzen organischer Thiosulfonsäuren, wie der p-Toluolthiosulfonsäure, durchgeführt.

Die Emulsionen können mit üblichen Sensibilisierungsfarbstoffen spektral sensibilisiert werden, wie beispielsweise in Research Disclosure 365 044, Kapitel V (September 1994), beschrieben. Dabei sind Sensibilisatoren für rotes (Wellenlänge 600 ... 690 nm) und infrarotes (> 690 nm) Licht bevorzugt.

Die Emulsionen können auch übliche Antischleiermittel enthalten. Bevorzugt sind ggf. substituiertes Benztriazol, 5-Nitroindazol und 1-Phenyl-5-mercaptotetrazol. Diese Mittel können zu jedem Zeitpunkt bei der Emulsionsherstellung zugesetzt werden oder in einer Hilfsschicht des photographischen Materials enthalten sein. Zur Verbesserung der photographischen Eigenschaften kann der Emulsion vor oder nach der chemischen Reifung ein Jodid, vorzugsweise ein Alkalijodid, in einer Menge von etwa 0,5 bis 5 millimol je Mol Silber zugesetzt werden.

Die Emulsionen können bekannte Polymerdispersionen enthalten, durch die beispielsweise die Dimensionsstabilität des photographischen Materials verbessert wird. Es handelt sich dabei in der Regel um Latices hydrophober Polymere in wäßriger Matrix. Beispiele für geeignete Polymerdispersionen sind in der Research Disclosure 176 043, Kapitel IX B (Dezember 1978) genannt. Bevorzuge werden Polymere von Estern der Acryl- und der Methacrylsäure, besonders bevorzugt von $C_1$- bis $C_6$-Estern. Die Teilchengröße dieser Polymerlatices liegt bevorzugt zwischen 20 und

100 nm.

Die Schichten der photographischen Materialien können durch Zusatz eines Härtungsmittels gehärtet sein. Härtungsmittel sind beispielsweise in der Research Disclosure 365 044, Kapitel II B (September 1994) genannt. Dieses Härtemittel kann der Emulsion zugesetzt oder über eine Hilfsschicht beispielsweise eine äußere Schutzschicht, eingebracht werden. Geeignete Härtemittel sind beispielsweise Aldehyde, wie Formaldehyd oder Glutaraldehyd, Vinylsulfone, s-Triazine, Aziridine, Carbodiimide, Carbamoylpyridiniumverbindungen, mono- und bifunktionelle Carbamoylimidazoliumverbindungen. Ein bevorzugtes Härtungsmittel ist Hydroxydichlorotriazin.

Das photographische Material kann weitere Zusätze, die für die Erzeugung bestimmter Eigenschaften bekannt und üblich sind, enthalten. Solche Mittel sind zum Beispiel in der Research Disclosure 365 044 (September 1994) in den Kapiteln VI (Aufheller), IX A (Beschichtungshilfsmittel), IX B (Weichmacher und Gleitmittel) und IX D (Mattierungsmittel) aufgeführt.

Der Gelatinegehalt der Emulsionen liegt im allgemeinen zwischen 30 und 150 g je mol Silber; bevorzugt wird der Bereich zwischen 40 und 100 g je mol Silber.

Die erfindungsgemäßen Silberhalogenidmaterialien können zur Herstellung von schwarz-weißen Negativbildern mit ultrasteilem Kontrast verwendet werden. Hierzu können sie mit einer geeigneten Lichtquelle bildmäßig belichtet werden. Dies kann sowohl vollflächig durch eine Kopiervorlage beispielsweise mit einer Glühlampe oder einer Entladungslampe, ggf. mittels eines Farbfilters, oder auch durch Abtasten mit einem intensitätsmodulierten Lichtstrahl, beispielsweise aus einem Gas-, Feststoff- oder Halbleiterlaser geschehen. Ein bevorzugtes Verfahren wendet einen HeNe-Laser oder einen Halbleiterlaser mit Emission im roten Spektralbereich an.

Die Verarbeitung des belichteten Materials zur Erzeugung des Bildes umfaßt bevorzugt die Behandlung mit einem wäßrigen Entwicklungsbad, mit einem wäßrigen Fixierbad, die Wässerung und die Trocknung.

Die Verarbeitung wird bevorzugt als Schnellverfahren mit einer Entwicklungszeit von höchstens 30 s und entsprechend angepaßter Entwicklertemperatur, beispielsweise 32 °C und darüber, ausgeführt. Um eine hohe Entwicklungsgeschwindigkeit zu erreichen und durch geringe Regenerierungsrate die Menge der Abfallösung gering zu halten, verwendet man bevorzugt Entwicklerlösungen mit einem hohen Gehalt an Entwicklersubstanz, beispielsweise mehr als 25 g je Liter.

Die Entwicklerlösungen enthalten bevorzugt eine Dihydroxybenzol-Entwicklersubstanz, beispielsweise Hydrochinon, Brenzkatechin, Methylhydrochinon oder Chlorhydrochinon, und ein Oxydationsschutzmittel, bevorzugt ein Alkalisulfit in einer Konzentration von mehr als 0,3 mol je Liter. Bevorzugt werden Lösungen mit pH-Werten von 9 bis höchstens 11, besonders bevorzugt von 10 bis 10,5, verwendet. Solche Entwicklerlösungen sind auch im Gebrauch gut haltbar. Ebenfalls verwendbar sind Entwicklerlösungen mit einer Entwicklersubstanz vom Ascorbinsäuretyp, beispielsweise L-Ascorbinsäure, D-Ascorbinsäure, L-Erythroascorbinsäure, 6-Desoxy-L-ascorbinsäure, Imino-L-erythroascorbinsäure oder Zuckerderivate dieser Säuren. Geeignet sind auch Entwicklerlösungen, die sowohl Entwicklersubstanzen vom Dihydroxybenzol-Typ als auch solche vom Ascorbinsäuretyp enthalten.

Bevorzugt enthalten die Entwicklerlösungen bekannte superadditiv wirkende Hilfsentwicklersubstanzen, beispielsweise N-Methyl-p-aminophenol oder 1-Phenylpyrazolidinon-3 oder Derivate dieser Verbindungen.

Ebenfalls bevorzugt sind Entwickler, die Antischleiermittel aus der Gruppe der Benztriazole enthalten. Solche Antischleiermittel sind beispielsweise Benztriazol, 5-Chlorbenztriazol, 5-Brombenztriazol, 5-Methylbenztriazol, 5-Nitrobenztriazol, 5-Benzoylaminobenztriazol, 1-Hydroxymethylbenztriazol, 6-Cyanobenztriazol.

Die erfindungsgemäßen Aufzeichnungsmaterialien zeichnen sich nicht nur durch eine ausgezeichnete Lagerstabilität aus. Sie sind auch empfindlicher und zeigen höhere Kontrastwerte. Wird keine höhere Empfindlichkeit gewünscht, kann man weniger Sensibilisatorfarbstoff verwenden und so zu Materialien gelangen, die nach der Verarbeitung keine störende Färbung durch Farbstoffreste zeigen. Man kann aber auch feinerkörniges Silberhalogenid verwenden und durch die höhere Deckkraft des daraus entwickelten Silbers mit einem geringeren Auftrag an Silberhalogenid auskommen.

Die Erfindung kann zur Erzeugung von schwarz-weißen Negativbildern mit ultrasteilem Kontrast, insbesondere bei der Reproduktion in der Druckvorstufe für den Schwarz-Weiß- und Mehrfarbdruck, angewendet werden.

In den folgenden Ausführungsbeispielen sind die Mengen der Emulsionszusätze auf 1 mol Silberhalogenid bezogen, falls nicht anders vermerkt.

Beispiel 1

Durch pAg-aeregelte Zweistrahlfällung in wäßriger Gelatinelösung wurde eine kubische Silberbromoiodidemulsion (2 Molprozent Iodid) hergestellt, deren Körner eine Kantenlänge von 0,18 µm hatten. Nach der Entfernung der löslichen Salze mittels des Flockverfahrens wurde mit weiterer Gelatine redispergiert und eine chemische Reifung mit 0,01 millimol Hexachloroplatinsäure, 8 mg Kaliumthiotosylat, 6 mg Benzolsulfinsäure, 0,4 millimol Thiosulfat und 0,1 millimol Tetrachlorogoldsäure durchgeführt. Danach wurden noch 5 millimol Kaliumiodid, 300 mg 7-Hydroxy-1-methyltriazaindolizin, 200 mg Nitroindazol, ein Sensibilisator für den roten Spektralbereich, ein Beschichtungshilfsmittel

(Triton® X-200; Hersteller: Rohm & Haas), 0,15 millimol 1-Pyridiniumacetyl-2-(4-benzyloxyphenyl)-hydrazinbromid (Verbindung H-9), 600 mg N-(3-Dibutylaminopropyl)benzolsulfonamidhydrochlorid (Verbindung A-37) und 600 mg Polyvinylpyrrolidinon (Molmasse 30000) sowie die stabilisierenden Verbindungen nach Tabelle 1 zugesetzt.

Durch Auftragen der Emulsion zusammen mit zwei gelatinehaltigen Schutzschichtlösungen auf einen mit einer Anticurl- und Antistatik-Rückschicht versehenen Polyethylenterephthalat-Schichtträger wurden Scannerfilme hergestellt. Der Silberauftrag betrug 3,5 g/$m^2$, die Schutzschichten enthielten je $m^2$ insgesamt 0,9 g Gelatine, 500 mg kolloidale Kieselsäure sowie Polyethylenoxid 4000, Hydrochinon und ein Polyethylenoxidat nach der DE-A-43 11 888. Die Härtung der Beschichtung erfolgte durch Zusatz von je 0,1 millimol Hydroxydichlortriazin und Bis-Dimethylcarbamoylimidazoliumchlorid pro g Gelatine zu den Beschichtungslösungen.

Proben der so erhaltenen Aufzeichnungsmaterialien wurden mit einem Blitzlicht (Belichtungszeit $10^{-3}$ s) durch ein Rotfilter und einen Dichteverlaufskeil belichtet und mit einem Entwickler der unten angegebenen Zusammensetzung sowie einem handelsüblichen Fixierbad in einer automatischen Entwicklungsmaschine verarbeitet. Die Entwicklung erfolgte bei 35 °C und dauerte 30 s. An den verarbeiteten Proben wurden Empfindlichkeit S als Kehrwert der Belichtung bezogen auf 100 für Probe 1, Kontrast G1 zwischen den Dichtewerten 0,1 und 0,4, Kontrast G2 zwischen 0,4 und 3,5, Schleier Dmin und Maximaldichte Dmax ermittelt. Die Filme wurden bei 22 °C und 55 % relativer Luftfeuchte gelagert und sowohl 3 Tage als auch 3 Monate nach der Herstellung geprüft. Die Ergebnisse sind in Tabelle 1 angegeben.

Zusammensetzung des Entwicklers (alle Bestandteile in g)

| | |
|---|---|
| Wasser | 500 |
| Natriumbisulfit | 50 |
| Kaliumhydroxid | 27 |
| Ethylendiamintetraessigsäure, Trinatriumsalz | 3,7 |
| Hydrochinon | 25 |
| Kaliumbromid | 4 |
| Benzotriazol | 0,3 |
| Phenylmercaptotetrazol | 0,05 |
| 4-Hydroxymethyl-4-methyl-1-phenylpyrazolidinon | 1 |
| Borsäure | 3 |
| Natriumhydroxid | 24 |
| Diethylenglykol | 40 |

Mit Wasser auf 1 l auffüllen, pH auf 10,5 bei 22 °C einstellen.

Tabelle 1:

| Probe | Stabilisator | | Dmin | Dmax | S | G1 | G2 |
|---|---|---|---|---|---|---|---|
| | Verb. | Menge (mg) | | | | | |
| 1 | kein | Zusatz | 0,04 (0,06) | 6,5 (6,5) | 100 (100) | 2,5 (2,0) | 15 (13) |
| 2 | PMT | 40 | 0,04 (0,06) | 6,0 (6,0) | 50 (50) | 2,5 (2,2) | 10 (10) |
| 3 | BT | 80 | 0,04 (0,05) | 6,3 (6,3) | 79 (71) | 2,4 (2,3) | 13 (12) |
| 4 | BT | 160 | 0,04 (0,05) | 6,3 (6,3) | 66 (63) | 2,1 (2,0) | 10 (9) |
| 5 | $Na_2SO_3$ | 20 | 0,04 (0,05) | 6,5 (6,5) | 100 (100) | 2,6 (2,2) | 15 (13) |

PMT = Phenylmercaptotetrazol,

BT = Benzotriazol.

Tabelle 1: (fortgesetzt)

| Probe | Stabilisator | | Dmin | Dmax | S | G1 | G2 |
|---|---|---|---|---|---|---|---|
| | Verb. | Menge (mg) | | | | | |
| 6 | $Na_2SO_3$ | 200 | 0,04 (0,04) | 6,5 (6,5) | 117 (117) | 4,3 (4,1) | 17 (16) |
| 7 | $Na_2SO_3$ | 400 | 0,04 (0,04) | 6,5 (6,5) | 126 (126) | 5,0 (5,0) | 19 (19) |
| 8 | $Na_2SO_3$ | 800 | 0,04 (0,04) | 6,5 (6,5) | 126 (126) | 5,2 (5,0) | 21 (21) |
| 9 | $Na_2S_2O_5$ | 400 | 0,04 (0,04) | 6,5 (6,5) | 126 (126) | 5,0 (5,0) | 19 (19) |

Die Meßwerte nach drei Monaten sind in Klammern unter den Dreitageswerten angegeben.

Beispiel 2

In gleicher weise wie in Beispiel 1 wurden rotempfindliche Aufzeichnungsmaterialien hergestellt. Anstelle der Aminoverbindung A-37 wurden jedoch 0,06 mol der Phosphoniumverbindung P-1 und statt Polyethylenoxid 4000 wurde Polyethylenoxid 20000 verwendet. Außerdem wurde ein Sulfitsalz wie in der Tabelle 2 angegeben zugesetzt.

Die Prüfung und Bewertung der Materialien erfolgte wie in Beispiel 1 beschrieben. Die Ergebnisse sind in Tabelle 2 in gleicher Weise wie in Tabelle 1 aufgeführt.

| Probe | Stabilisator | | Dmin | Dmax | S | G1 | G2 |
|---|---|---|---|---|---|---|---|
| | Verb. | Menge (mg) | | | | | |
| 11 | kein | Zusatz | 0,04 (0,06) | 6,3 (6,3) | 100 (100) | 2,7 (2,4) | 15 (12) |
| 12 | $Na_2SO_3$ | 400 | 0,04 (0,04) | 6,5 (6,5) | 141 (135) | 8,0 (7,5) | 22 (20) |

Auch bei diesem Versuch wurde überraschenderweise gefunden, daß durch Zugabe des Sulfitsalzes der Schleieranstieg bei der Lagerung vermieden wird, ohne daß Empfindlichkeit oder Kontrast gemindert werden. Darüber hinaus wird der Kontrast, insbesondere im Fußbereich, deutlich erhöht.

**Patentansprüche**

**1.** Photographisches Silberhalogenidmaterial zur Erzeugung von Schwarz-weißen Negativbildern umfassend mindestens eine lichtempfindliche Silberhalogenid-Emulsionsschicht auf einem Schichtträger, wobei in der Silberhalogenid-Emulsionsschicht oder in einer mit dieser in reaktiver Beziehung stehenden Schicht sowohl eine Hydrazinverbindung als auch eine kontraststeigernde Amino- und/oder Phosphoniumverbindung vorhanden sind,
dadurch gekennnzeichnet, daß
die Silberhalogenid-Emulsionsschicht oder die mit dieser in reaktiver Beziehung stehende Schicht außerdem ein Sulfit-, Hydrogensulfit- oder Bisulfitsalz enthält.

**2.** Material nach Anspruch 1,
dadurch gekennnzeichnet, daß
das Sulfit-, Hydrogensulfit- oder Bisulfitsalz ein Salz eines Alkalimetalls ist.

**3.** Material nach Anspruch 1 oder 2,

dadurch gekennnzeichnet, daß die Menge des Sulfit-, Hydrogensulfit- oder Bisulfitsalzes so bemessen ist, daß sie 0,05 bis 20 millimol, bevorzugt 0,1 bis 10 millimol, besonders bevorzugt 1 bis 10 millimol Sulfitionen je mol Silberhalogenid entspricht.

**4.** Material nach einem der Ansprüche 1 bis 3, dadurch gekennnzeichnet, daß die Hydrazinverbindung die allgemeine Formel

B - Phenyl - NHNH - L - G

hat, wobei B eine Ballastgruppe, G eine aktivierende Gruppe, -Phenyl- ein ggf. substituierter Phenylenrest und L gleich CO oder CO-CO ist.

**5.** Material nach einem der Ansprüche 1 bis 4, dadurch gekennnzeichnet, daß die kontraststeigernde Aminoverbindung unter die allgemeine Formel (A) fällt

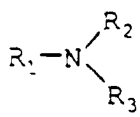 (A),

worin jeder der Substituenten $R_1$, $R_2$ und $R_3$ ein Wasserstoffatom, eine Alkylgruppe, eine substituierte Alkylgruppe, eine Alkenylgruppe, eine substituierte Alkenylgruppe, eine Alkinylgruppe, eine Arylgruppe oder eine substituierte Arylgruppe sein kann, die Substituenten zu einem oder zwei Ringen verknüpft sein können, jedoch nicht alle drei gleichzeitig Wasserstoff sind.

**6.** Material nach einem der Ansprüche 1 bis 5, dadurch gekennnzeichnet, daß die kontraststeigernde Aminoverbindung unter eine der allgemeinen Formeln

$$RR^1N - X - (CN)_n \quad (B)$$

$$NC - X - NR^2 - B - NR^2 - X - CN \quad (C)$$

$$RR^1N - X - N(CH_2CN)_2 \quad (D)$$

fällt, worin bedeuten

R, $R^1$ gleich oder verschieden je eine ggf. substituierte Alkylgruppe mit 1 bis 6 Kohlenstoffatomen oder eine ggf. substituierte Benzylgruppe, oder R und $R^1$ gemeinsam mit dem Stickstoffatom und ggf. einem weiteren Sauerstoff- oder Stickstoffatom einen fünf-bis achtgliedrigen Ring,

$R^2$ eine gesättigte oder ungesättigte Alkylgruppe oder eine Arylgruppe, diese Gruppen können weiter substituiert sein, auch kann eine Alkylgruppe mit ihrem vom Stickstoff abgewandten Ende unter Bildung eines Ringes an ein Kohlenstoffatom der Gruppe B gebunden sein,

X eine zweiwertige oder dreiwertige verbindende Gruppe,

B eine zweiwertige verbindende Gruppe,

n 1 oder 2.

7. Material nach einem der Ansprüche 1 bis 6, dadurch gekennnzeichnet, daß die Phosphoniumverbindung die allgemeine Formel (P) aufweist

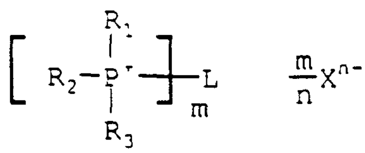

(P),

worin bedeuten

$R_1$, $R_2$ und $R_3$ jeweils eine Alkyl-, Cycloalkyl-, Aryl-, Alkenyl- oder Cycloalkenylgruppe oder eine heterocyclische Gruppe, wobei diese Gruppen jeweils auch Substituenten haben können,

L eine an das Phosphoratom über ein Kohlenstoffatom gebundene m-wertige organische Gruppe,

n 1, 2 oder 3,

X ein n-wertiges Anion, welches auch an L gebunden sein kann.

8. Material nach einem der Ansprüche 1 bis 7, dadurch gekennnzeichnet, daß die Silberhalogenidemulsion eine Silberbromid- oder Silberiodobromidemulsion ist.

9. Material nach einem der Ansprüche 1 bis 8, dadurch gekennnzeichnet, daß die Silberhalogenidemulsion für rotes und/oder infrarotes Licht sensibilisiert ist.

10. Verwendung eines Materials nach einem der Ansprüche 1 bis 9 zur Erzeugung von schwarz-weißen Negativbildern mit ultrasteilem Kontrast.

## Claims

1. Photographic silver halide material for producing black and white negatives comprising at least one light-sensitive silver halide emulsion layer on a substrate, where, in the silver halide emulsion layer or a layer in a reactive relationship therewith, both a hydrazine compound and a contrast-boosting amino compound and/or phosphonium compound are present, **characterized in that** the silver halide emulsion layer or the layer in a reactive relationship therewith also contains a sulphite, hydrogen sulphite or bisulphite salt.

2. Material according to Claim 1, **characterized in that** the sulphite, hydrogen sulphite or bisulphite salt is a salt of an alkali metal.

3. Material according to Claim 1 or 2, **characterized in that** the quantity of sulphite, hydrogen sulphite or bisulphite salt is calculated so that it corresponds to 0.05 to 20 millimoles, preferably 0.1 to 10 millimoles, particularly preferably 1 to 10 millimoles of sulphite ions per mole of silver halide.

4. Material according to any one of Claims 1 to 3, **characterized in that** the hydrazine compound has the general formula

B - phenyl - NHNH - L - G

where B is a ballast group, G is an activating group, -phenyl- is an optionally substituted phenylene radical and L is CO or CO-CO.

5. Material according to any one of Claims 1 to 4, **characterized in that** the contrast-boosting amino compound is of the formula (A)

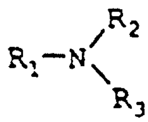

(A)

wherein each of the substituents $R_1$, $R_2$ and $R_3$ may be a hydrogen atom, an alkyl group, a substituted alkyl group, an alkenyl group, a substituted alkenyl group, an alkinyl group, an aryl group or a substituted aryl group, the substituents may be linked to form one or two rings, but the three are not all simultaneously hydrogen.

6. Material according to any one of Claims 1 to 5, **characterized in that** the contrast-boosting amino compound is of one of the general formulae

$$RR^1N - X - (CN)_n \qquad (B)$$

$$NC - X - NR^2 - B - NR^2 - X - CN \qquad (C)$$

$$RR^1N - X - N(CH_2CN)_2 \qquad (D)$$

wherein

| | |
|---|---|
| R and $R^1$, | which may be the same or different, each represent an optionally substituted alkyl group with 1 to 6 carbon atoms or an optionally substituted benzvl group, or R and $R^1$ together with the nitrogen atom and optionally a further oxygen or nitrogen atom, represent a five- to eight-membered ring, |
| $R^2$ | represents a saturated or unsaturated alkyl group or an aryl group, these groups may be further substituted, moreover an alkyl group may be bound by its end remote from the nitrogen to a carbon atom of group B to form a ring, |
| X | represents a divalent or trivalent combining group, |
| B | represents a divalent combining group, |
| n | represents 1 or 2. |

7. Material according to any one of Claims 1 to 6, **characterized in that** the phosphonium compound has the general formula (P)

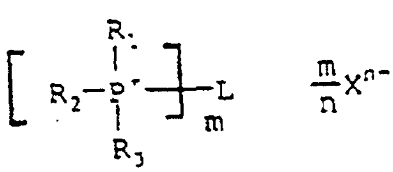

(P),

wherein

| | |
|---|---|
| $R_1$, $R_2$ and $R_3$ | represent an alkyl, cycloalkyl, aryl, alkenyl or cycloalkenyl group or a heterocyclic group, where these groups may each also have substituents, |
| L | represents an m-valent organic group bond to the phosphorus atom via a carbon atom, |
| n | represents 1, 2 or 3, |
| X | represents an n-valent anion which may also be bound to L. |

**8.** Material according to any one of Claims 1 to 7, **characterized in that** the silver halide emulsion is a silver bromide or silver iodobromide emulsion.

**9.** Material according to any one of Claims 1 to 8, **characterized in that** the silver halide emulsion is sensitized to red and/or infrared light.

**10.** Use of a material according to any one of Claims 1 to 9 for producing black and white negatives with ultrahard-gradation contrast.

## Revendications

**1.** Matériau photographique à l'halogénure d'argent pour l'obtention d'images négatives en noir et blanc comprenant au moins une couche d'émulsion photosensible à l'halogénure d'argent sur un support de couche, dans lequel, dans la couche d'émulsion à l'halogénure d'argent ou dans une couche en relation de réaction avec la première citée, sont présents aussi bien un composé d'hydrazine qu'un composé amino et/ou de phosphonium augmentant le contraste, **caractérisé en ce que** la couche d'émulsion à l'halogénure d'argent ou la couche se trouvant en relation de réaction avec la première citée, contient en outre un sel de sulfite, d'hydrogénosulfite ou de bisulfite.

**2.** Matériau selon la revendication 1, **caractérisé en ce que** le sel de sulfite, d'hydrogénosulfite ou de bisulfite est un sel de métal alcalin.

**3.** Matériau selon la revendication 1, **caractérisé en ce que** la quantité du sel de sulfite, d'hydrogénosulfite ou de bisulfite est calculée de telle sorte qu'elle corresponde à une quantité de 0,05 à 20 millimoles, de préférence de 0,1 à 10 millimoles, de manière particulièrement préférée de 1 à 10 millimoles d'ions sulfite par mole de l'halogénure d'argent.

**4.** Matériau selon l'une quelconque des revendications 1 à 3, **caractérisé en ce que** le composé d'hydrazine répond à la formule générale

B - phényl - NHNH - L - G

dans laquelle B représente un groupe de ballast, G représente un groupe d'activation, "phényl" représente un radical phényle le cas échéant substitué et L représente CO ou CO-CO.

**5.** Matériau selon l'une quelconque des revendications 1 à 4, **caractérisé en ce que** le composé amino augmentant le contraste rentre dans la forme générale ci-après

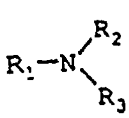

(A),

dans laquelle chacun des substituants peut représenter un atome d'hydrogène, un groupe alkyle, un groupe alkyle substitué, un groupe alcényle, un groupe alcényle substitué, un groupe alcynyle, un groupe aryle ou encore un groupe aryle substitué, les substituants pouvant être liés les uns aux autres pour former un ou deux noyaux ; toutefois, les trois substituants ne peuvent pas représenter simultanément un atome d'hydrogène.

**6.** Matériau selon l'une quelconque des revendications 1 à 5, **caractérisé en ce que** le composé amino augmentant le contraste rentre dans une des formules générales ci-après

$$RR^1N - X - (CN)_n \qquad (B)$$

$$NC - X - NR^2 - B - NR^2 - X - CN \qquad (C)$$

$$RR^1N - X - N(CH_2CN)_2 \qquad (D)$$

dans lesquelles

$R, R^1$ identiques ou différents représentent respectivement un groupe alkyle le cas échéant substitué contenant de un à six atomes de carbone ou un groupe benzyle le cas échéant substitué, ou bien les radicaux R et $R^1$ représentent ensemble avec l'atome d'azote et le cas échéant avec un atome d'oxygène ou d'azote supplémentaire un noyau hétérocyclique pentagonal à dodécagonal, ou bien le radical R ou $R^1$ dont l'extrémité libre est reliée au groupe de liaison X représente un noyau qui comporte l'atome d'azote du groupe amino tertiaire,

$R^2$ représente un groupe alkyle saturé ou non saturé ou un groupe aryle, ces groupes pouvant être ultérieurement substitués; de même, un groupe alkyle peut être lié à un atome de carbone du groupe B avec son extrémité se détournant de l'atome d'azote en formant un noyau,

X représente un groupe de liaison bivalent ou trivalent,

B représente un groupe de liaison bivalent,

n représente 1 ou 2.

**7.** Matériau selon l'une quelconque des revendications 1 à 6, **caractérisé en ce que** le composé de phosphonium répond à la formule générale (P)

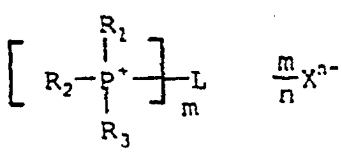

(P),

dans laquelle

$R_1$, $R_2$ et $R_3$ 8 représentent respectivement un groupe alkyle, un groupe cycloalkyle, un groupe aryle, un groupe alcényle ou un groupe cycloalcényle ou encore un groupe hétérocyclique, ces groupes pouvant respectivement également porter un substituant,

L représente un groupe organique à valence m lié à l'atome de phosphore via un atome de carbone,

n représente 1, 2 ou 3,

x représente un anion à valence n qui peut également être lié à L.

8. Matériau selon l'une quelconque des revendications 1 à 7, **caractérisé en ce que** l'émulsion à l'halogénure d'argent est une émulsion au bromure d'argent ou une émulsion à l'iodobromure d'argent.

9. Matériau selon l'une quelconque des revendications 1 à 8, **caractérisé en ce que** l'émulsion à l'halogénure d'argent a été sensibilisée pour la lumière rouge et/ou pour la lumière infrarouge.

10. Utilisation d'un matériau selon l'une quelconque des revendications 1 à 9 pour obtenir des images négatives en noir et blanc à contraste présentant une gradation ultradure.